# EUROPEAN PATENT SPECIFICATION

(11) **EP 2 123 571 B1**
(45) Date of publication and mention of the grant of the patent: **08.02.2012**
(21) Application number: 08721871.5
(22) Date of filing: 12.03.2008
(51) Int. Cl.: B65D 65/40, B65D 1/00, B65D 1/02, B65D 1/32, B65D 35/08

(54) **MULTI-LAYER PLASTIC CONTAINER FOR NON-OILY CONTENT**
MEHRSCHICHTIGER KUNSTSTOFFBEHÄLTER FÜR NICHT ÖLIGE INHALTE
CONTENEUR EN MATIÈRE PLASTIQUE MULTICOUCHE POUR UN CONTENU NON HUILEUX

(30) Priority: 15.03.2007 JP 2007066491
(43) Date of publication of application: 25.11.2009
(73) Proprietor: Toyo Seikan Kaisha, Ltd., Tokyo 100-8522 (JP)
(72) Inventor: AKUTSU, Yosuke, Yokohama-shi Kanagawa 240-0062 (JP); KIKUCHI, Atsushi, Yokohama-shi Kanagawa 240-0062 (JP)
(74) Representative: Manley, Nicholas Michael
(86) International application number: PCT/JP2008/054455
(87) International publication number: WO 2008/111603

(56) References cited:
- JP-A- 02 140 249
- JP-A- 06 072 422
- JP-A- 2001 305 698
- DATABASE WPI Week 200056 Thomson Scientific, London, GB; AN 2000-589831 XP002588123 -& JP 2000 198164 A (MITSUBISHI GAS CHEM CO INC) 18 July 2000 (2000-07-18)
- DATABASE WPI Week 199419 Thomson Scientific, London, GB; AN 1994-156266 XP002588124 -& JP 6 099481 A (TOPPAN PRINTING CO LTD) 12 April 1994 (1994-04-12)

## Description

### Technical Field:

This invention relates to a multi-layer plastic bottle applied to ketchups.

### Background Art:

A plastic container is easy to form and can be inexpensively produced. Upon employing a multi-layer structure, further, a variety of properties can be easily improved paving the way for using the plastic containers for a wide range of applications. For example, a multi-layer plastic container of which the inner wall surface is formed by a polyolefin resin layer such as of polyethylene, has been used as a container for containing viscous and slurry-like or paste-like contents.

The plastic container containing a viscous content is, in many cases, preserved in an inverted state so that the viscous content filled therein can be quickly discharged or can be used up to the last drip without being left in the container. It is, therefore, desired that when the container is inverted, the content which, for example, may be viscous quickly falls down without staying on the inner wall surface of the container.

Various plastic containers have been proposed suppressing the adhesion of the contents on the inner wall surfaces of the containers. For example, patent document 1 is proposing a multi-layer polyethylene container used for containing a shampoo or a liquid detergent which chiefly comprises a surfactant, wherein a polyethylene layer forming the inner surface is blended with 4000 ppm or more of erucic amide or with 1 to 5% by weight of silicone oil as an agent for preventing the adhesion on the inner surface of the container.

As will be understood from the proposal of the above patent document 1, study for enabling nearly the whole amount of content to be quickly discharged out of the container without adhering on the wall surfaces of the container, has been conducted much concerning the oily and sticky contents such as shampoos and liquid detergents, but has not been much conducted concerning non-oily substances such as ketchups which are viscous but are not oily or sticky. For example, a patent document 2 proposes a polyolefin resin bottle for containing such foods as ketchup or mayonnaise, the resin layer comprising the polyolefin blended with two or more kinds of fatty acid amides. According to this proposal, however, the two kinds of fatty acid amides are added to the surface layer to impart slipping property to the bottle to thereby improve anti-blocking property of the bottle and to prevent inconvenience caused by the contact among the bottles or by the contact of the bottle with any other member on the bottle production line which, however, is not to prevent the content from adhering on the inner wall surfaces of the container.

Patent document 1: JP-A-6-99481
Patent document 2: Japanese Patent No. 2627127

### Disclosure of the Invention:

### Problems to be Solved by the Invention:

It is, therefore, an object of the present invention to provide a multi-layer plastic bottle for ketchup, which, when inverted, enables a ketchup to favorably fall down when the content is hot-filled therein, and which can be produced inexpensively and easily.

Another object of the present invention is to provide a bottle which does not permit properties to be impaired by heat despite the ketchup being hot-filled therein, and, when inverted, permits the ketchup to fall down excellently.

### Means for Solving the Problems:

According to the present invention, there is provided a multi-layer plastic bottle hot-filled with ketchup, having at least a polyolefin resin layer on an inner surface thereof and for being filled with the ketchup, wherein the polyolefin resin layer on the inner surface of the bottle contains an aliphatic amide in an amount of not less than 500 ppm but less than 4000 ppm.

In the multi-layer plastic bottle of the present invention, favorable embodiments are as described below.
(1) At least part of the aliphatic amide is an unsaturated aliphatic amide;
(2) The unsaturated aliphatic amide has carbons in a number in a range of 14 to 24;
(3) The unsaturated aliphatic amide is an oleic amide;
(4) The polyolefin resin layer is blended with an unsaturated aliphatic amide and a saturated aliphatic amide as the aliphatic amide;
(5) The unsaturated aliphatic amide and the saturated aliphatic amide are blended at a weight ratio of 1:0.1 to 1: 4 ;
(6) At least two kinds of amides of oleic amide and erucic amide are contained as the unsaturated aliphatic amide;
(7) The saturated aliphatic amide is a stearic acid amide; and
(8) The polyolefin resin layer on the inner surface of the bottle is a polyethylene resin layer.

The multi-layer plastic bottle of the present invention, when inverted, permits ketchup to excellently fall down owing to the fact that a polyolefin resin layer (e.g., polyethylene resin layer) present on the inner surface of the container is blended with an unsaturated aliphatic amide such as an aliphatic amide and, particularly, an oleic acid in an amount of not less than 500 ppm but less than 4000 ppm. Concretely, when preserved in an inverted state, ketchup quickly falls down without staying on the inner wall surfaces of the container. As a result, the ketchup can be thoroughly discharged out of the container without being left on the bottom of the container.

According to Experiment 1 appearing later, for example, a substrate was made from a polyethylene resin blended with various additives, a ketchup of a given amount was placed on the substrate which was, then, tilted at 85 degrees to measure the speed of the ketchup that is rolling down (see Experiment 1 for detailed conditions). The faster the speed of roll down, the more excellent the fall-down performance when inverted.

Table 1 showing the experimental results (see Experiment 1 appearing later) tells that when a slip additive as represented by a higher fatty acid or a salt thereof, or a fluidized paraffin or a paraffin wax is blended, the roll-down speed is only slightly faster than that of a blank polyethylene resin substrate blended with quite no additive, whereas the polyethylene resin substrate blended with the aliphatic amide according to the present invention features a very greatly increased roll-down speed. It will be learned from the above Experimental results that the multi-layer plastic bottle of the present invention enables even the non-oily content and, particularly, the viscous content to excellently fall down when inverted.

As will be learned from the above Experiment 1, further, the present invention uses an aliphatic amide and, particularly, an unsaturated aliphatic amide to greatly improve the inverted fall-down performance. When the stearic acid amide is used, for example, the roll-down speed of the ketchup is 1. 9 mm/min. , whereas when the unsaturated aliphatic amide is used, the roll-down speed of the ketchup is greater than 2 mm/min., and the roll-down speed exceeds 20 mm/min. when the oleic amide is used. It is, therefore, learned that what most contributes to the inverted fall-down performance is the aliphatic amide and, particularly, the unsaturated aliphatic amide. Among them, the oleic amide helps attain the greatest inverted fall-down performance.

In the present invention, though the reason has not been clarified yet why the inverted fall-down performance is improved by the aliphatic amide that is blended and, particularly, the inverted fall-down performance is markedly improved when the unsaturated aliphatic amide is blended, the present inventors presume as described below.

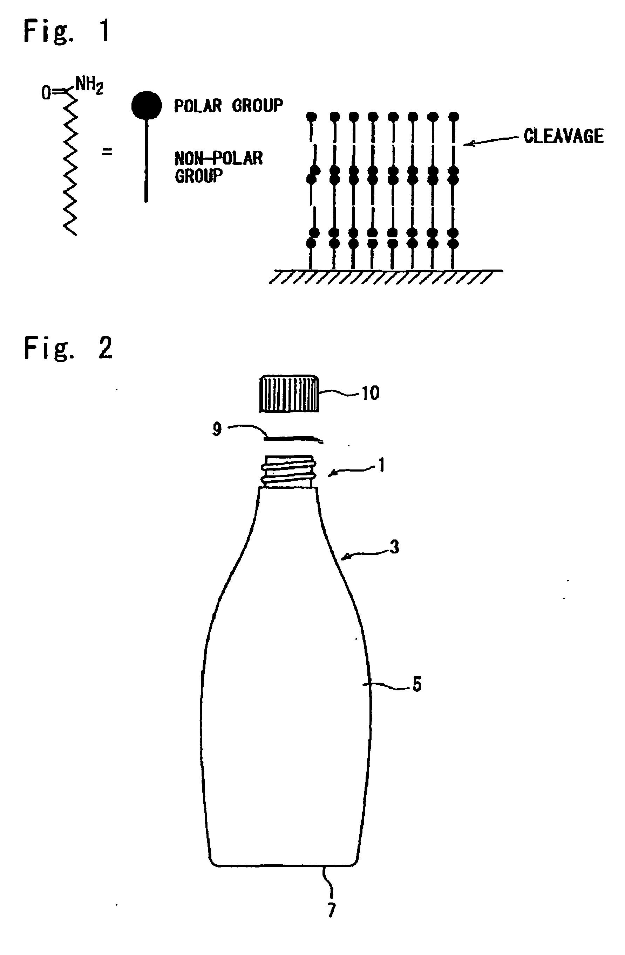

The aliphatic amide molecules are amphipatic molecules having a polar group (amide group) and a nonpolar group (hydrocarbon group), and, particularly, in which a hydrogen bond can be formed between an oxygen atom and a hydrogen atom in the amide group. As schematically illustrated in Fig. 1, therefore, it is considered that the aliphatic amide molecules bleeding on the surface of the polyethylene resin layer form a multiplicity of molecular layers due to an attractive force between the polar groups produced by the force of hydrogen bond and an attractive force produced by the Van der Waals force (considerably weaker than the force of hydrogen force) acting between the nonpolar groups. Therefore, the ketchup rolls down on the multiplicity of molecular layers. In this case, the ketchup has a high degree of affinity to the polar group of the aliphatic amide. While the ketchup is rolling down, therefore, cleavage occurs between the nonpolar groups having a weak bonding force in the multiplicity of molecular layers. Namely, in the present invention, cleavage occurs in the multiplicity of molecular layers of the aliphatic amide, and the ketchup rolls down while peeling off the aliphatic amide molecules in the upper part of the multiplicity of molecular layers. As a result, it is believed that the roll-down speed is large and, hence, excellent inverted fall-down performance is exhibited. For example, none of aliphatic acid such as stearic acid or paraffin wax forms such a multiplicity of molecular layers or develops cleavage. Therefore, the roll-down speed is slow and the inverted fall-down performance is not satisfactory.

Further, the unsaturated aliphatic amide has an unsaturated bond in the hydrocarbon chain. When the unsaturated aliphatic amide bleeds on the surface of the polyethylene resin layer to form a multiplicity of molecular layers, therefore, its degree of molecular order is low exhibiting a high molecular motion as compared to the saturated aliphatic amide without unsaturated bond. When the ketchup rolls down, therefore, cleavage easily occurs between the nonpolar groups. As a result, there are exhibited a very fast roll-down speed and a very excellent inverted fall-down performance. In fact, as described above, the roll-down speed is about 1.9 mm/min. when the stearic acid amide is added whereas the roll-down speed is as very fast as about 20 mm/min. when the oleic amide having the same number of carbons is added.

Here, when the multi-layer plastic bottle the inner polyolefin resin layer blended with the aliphatic amide is hot-filled with the ketchup, the above-mentioned inverted fall-down performance is not often exhibited to a sufficient degree. According to, for example, Experiment 3 appearing later, sample substrates blended with the unsaturated aliphatic amide and the saturated aliphatic amide were once held in a ketchup maintained at 85°C for 5 seconds, taken out therefrom, and were returned back to room temperature. Thereafter, the ketchup adhered on the surface of the substrate was washed away with ion-exchanged water, and the substrates were dried to measure again the roll-down speed at room temperature (23°C) in the same manner as described above. According to the experimental results, it was learned that the roll-down speed has greatly decreased when the unsaturated aliphatic amide was used and, particularly, when the oleic amide was used.

Among various slip additives, the unsaturated aliphatic amide, in particular, forms a multiplicity of molecular layers as shown in Fig. 1 and, therefore, exhibits excellent inverted fall-down performance. However, when the container is subjected to the thermal hysteresis due to hot-filing at, for example, 80°C or higher, it is considered that the multiplicity of molecular layers are destroyed or removed and, as a result, the inverted fall-down performance is impaired. That is, the multiplicity of molecular structures are destroyed or removed due to the thermal hysteresis; i.e., the multiplicity of molecular layer structures such as of the unsaturated aliphatic amide are made present on the inner surfaces of the container in a state which is not enough for exhibiting a high inverted fall-down performance.

That is, a drop in the inverted fall-down performance due to the thermal hysteresis tells that the fall-down performance is not generated by simply bleeding of the sip additive such as aliphatic amide on the surface of the plastic molded body but is generated by the formation of the multiplicity of molecular structures as shown in Fig. 1. If the fall-down performance is generated by simply being bled on the surface, then a high inverted fall-down performance would be attained even with a slip additive other than the aliphatic amide. Besides, even if subjected to the thermal hysteresis, after returned to room temperature, the properties of the component that is bled will be little different from the properties of before being subjected to the thermal hysteresis. Namely, it is not considered that the inverted fall-down property decreases through the thermal hysteresis.

According to the present invention, however, a decrease in the inverted fall-down performance is avoided by using the unsaturated aliphatic amide and the saturated aliphatic amide in combination as the aliphatic amide. As demonstrated in Experiments appearing later, upon using the unsaturated aliphatic amide and the saturated aliphatic amide in combination, the roll-down speed of when, for example, the oleic amide is used becomes nearly the same as that of when not subjected to the thermal hysteresis. As a result, excellent inverted fall-down performance can be realized even when the container is hot-filled with ketchup.

The reason why use of the unsaturated aliphatic amide and the saturated aliphatic amide in combination effectively prevents the inverted fall-down performance from being decreased by the thermal hysteresis, is presumably that the saturated aliphatic amide itself works to easily form a multiplicity of molecular layer structures, has a melting point higher than that of the unsaturated aliphatic amide and, hence, forms a multiplicity of molecular layer structures together with the unsaturated aliphatic amide and, further, that, when subjected to the thermal hysteresis, works to suppress thermal motion of the unsaturated aliphatic amide. As a result, it is presumed that the multiplicity of molecular layer structures are not destroyed or removed by the thermal hysteresis, but are maintained.

According to the present invention, further, an organic peroxide is added together with the aliphatic amide making it possible to stably maintain not only the inverted fall-down performance but also excellent inverted fall-down performance even after subjected to the thermal hysteresis of hot-filling the content. That is, the multiplicity of molecular layers of the aliphatic amide has poor adhesiveness to the surface of the polyolefin resin layer and may, therefore, be removed from the surface of the polyolefin resin layer due to external force caused by vibration or thermal hysteresis. Upon being blended with the organic peroxide, the organic peroxide reacts with the aliphatic amide and with the polyolefin resin which is the base material. As a result, the aliphatic amide that is bleeding is firmly fixed to the surface of the polyolefin resin layer. This anchoring effect stably maintains excellent inverted fall-down performance even after subjected to the thermal hysteresis of hot-fiiling.

Similarly, Experiment 6 described later dips the polyethylene resin substrate in hot water of 85°C for 30 seconds and measures the roll-down speed of the ketchup in the same manner as Example 1. According to this Experiment, the roll-down speed apparently decreases after dipped in hot water when the polyethylene resin substrate is blended with the aliphatic amide only. However, a decrease in the roll-down speed is not at all recognized when the polyethylene resin substrate is blended with the organic peroxide.

As described above, the polyethylene container of the present invention which also uses the organic peroxide produces excellent inverted fall-down performance owing to the anchoring effect stemming from the organic peroxide. In particular, since a viscous food such as ketchup is filled in the container while it is hot, the inverted fall-down performance that lasts long offers a very great advantage.

### Brief Description of the Drawings:

[Fig. 1] is a diagram illustrating a principle of the present invention.
[Fig. 2] is a view showing a polyethylene bottle of the present invention together with a cap.
[Fig. 3] is a diagram showing a relationship between the amount of adding an aliphatic amide and the roll-down speed of ketchup.
[Fig. 4] is a graph showing experimental results (experimental results of Table 3) in Experiment 4.
[Fig. 5] is a graph showing experimental results (experimental results of Table 4) in Experiment 5.

### The Best Mode of the Invention;

### <Non-oily contents>

The multi-layer plastic bottle of the present invention can be used for containing ketchup. This is because ketchups are desired to be discharged out of the bottle without staying on the bottle walls. The ketchup is hot-filled (usually at 80 to 90°C) for also the purpose of sterilization and, as described above, the polyethylene bottle of the present invention is capable of maintaining excellent inverted content fall-down performance even after subjected to the thermal hysteresis.

### <Bottle structure>

In the multi-layer plastic bottle of the invention to be filled with ketchup, the inner layer forming the inner surface of the container comprises a polyolefin resin layer. That is, the polyolefin resin has excellent moisture resistance. Upon forming the inner layer of the bottle by using the polyolefin resin, therefore, water content contained in the ketchup can be stably maintained so will not to be released for extended periods of time preventing a drop in the quality of the ketchup, effectively avoiding a decrease in the properties of the bottle caused by swelling due to water and, besides, offering advantage from the standpoint of cost.

As the polyolefin resin, though there is no particular limitation, there can be exemplified low-density polyethylene, straight chain low-density polyethylene, intermediate- or high-density polyethylene, polypropylene, poly 1-butene and poly 4-methyl-1-pentene. There can be used a random or block copolymer of α-olefins, such as ethylene, propylene, 1-butene or 4-methyl-1-pentene, as a matter of course. The above polyolefin resin has a melt flow rate (MFR, JIS K-6728) which, usually, lies in a range of about 0.1 to about 3 g/10 min. The polyolefin resin that is particularly preferably used in the present invention is polyethylene or polypropylene, and polyethylene is best suited.

In the plastic bottle of the present invention, the polyolefin resin layer (inner layer) on the inner surface of the container is blended with the aliphatic amide to improve the inverted fall-down performance. On the outer side of the polyolefin resin inner layer, there are provided various kinds of known resin layers to constitute a multi-layer structure. Upon forming the multi-layer structure, the aliphatic amide added to the polyolefin resin layer does not bleed on the outer surface of the bottle but selectively bleeds on the inner surface of the bottle. As a result, a multiplicity of molecular layers is formed on the inner surface of the bottle to exhibit a sufficient degree of inverted fall-down performance.

A representative example of the multi-layer structure will be a 5-layer structure comprising inner surface layer (polyolefin resin layer)/adhesive layer/oxygen-barrier layer/adhesive layer/outer surface layer. In the above layer structure, the adhesive layer is formed from an adhesive resin such as an acid-modified olefin resin, and the oxygen-barrier layer is formed from an oxygen-barrier resin such as an ethylene/vinyl alcohol copolymer. Further, the outer surface layer is, generally, formed by using the same polyolefin resin as the inner surface layer, but may also be formed by using a polyester resin such as of the other thermoplastic resin layer, e.g., polyethylene terephthalate. In the present invention, the aliphatic amide may be added to the inner surface layer only and does not have to be added to other layers. What contribute to improving the inverted fall-down performance are unsaturated and saturated aliphatic amides only that are added to the inner surface layer. Those added to other layers do not contribute to improving the inverted fall-down performance but simply result in an increase in the cost.

Further, the multi-layer structure is not limited to the above 5-layer structure only, but may be a structure having a further increased number of outer surface layers by using, for example, an oxygen-barrier layer and an adhesive layer. Moreover, the inner surface layer blended with the unsaturated and saturated aliphatic amides may be formed by using a low-density polyethylene or a linear low-density polyethylene to realize a 2-layer structure provided with a high-density polyethylene layer adapted for being printed on the outer surface side.

In the present invention, the layers constituting the bottle wall may have thicknesses adapted to their functions. For example, the inner surface layer blended with the aliphatic amide should have a thickness of at least not less than 50 µm. If the thickness is too small, the amide does not bleed in amounts sufficient for forming a multiplicity of layers and, as a result, the inverted fall-down performance becomes unsatisfactory. Further, the adhesive layer may have a thickness enough for maintaining a sufficiently large adhesive force, and the oxygen-barrier layer should have a thickness enough for exhibiting favorable oxygen-barrier property while effectively preventing the content from being deteriorated by oxygen that permeates through.

The multi-layer plastic bottle of the present invention having the above layer constitution can be produced by using resins (or resin compositions) for constituting the layers, extruding a molten parison through a multi-layer die head by co-extrusion molding, forming a test tube-like preform for forming a bottle by effecting the known direct-blow molding or co-injection molding, and blow-molding the preform in a customary manner.

The thus molded multi-layer plastic bottle has the shape as shown in, for example, Fig. 2, including a neck portion 1 with a screw, a body portion 5 continuous to the neck portion through a shoulder portion 3, and a bottom portion 7 closing the lower end of the body portion. After the bottle is filled with the ketchup, the opening portion at the upper end of the neck portion 1 is heat-sealed with a metal foil 9 such as an aluminum foil, and a predetermined cap 10 is fitted thereto. Thus, the bottle can be used as a packing container. To use the packing container, the cap 10 is opened, the metal foil 9 applied with a sealing member is peeled off, and the bottle is tilted or inverted to take out the content.

### <Kinds of amide and blending amounts>

In the plastic bottle of the above-mentioned multi-layer structure of the present invention, the polyolefin resin layer positioned on at least the inner surface of the bottle is blended with the aliphatic amide to thereby improve the inverted fall-down performance of the ketchup. Therefore, even a viscous ketchup can be quickly and thoroughly discharged out of the bottle without staying on the inner surface of the bottle wall.

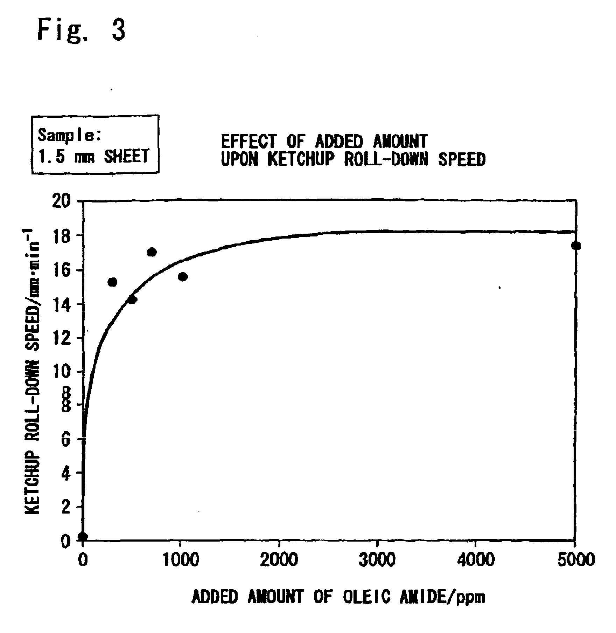

In the present invention, the aliphatic amide should be added to the polyolefin resin layer in an amount of not less than 500 ppm but less than 4000 ppm and, further preferably, in an amount of not less than 500 ppm but not more than 3000 ppm. That is, as will be understood from Fig. 3 (experimental results of Experiment 2) showing a relationship between the amount of blending the aliphatic amide (oleic amide) and the roll-down speed, when the amount of blending the aliphatic amide is smaller than the above range, the amount of bleeding is small, and the multiplicity of molecular layers are not formed to a sufficient degree. Therefore, the roll-down speed is small and the inverted fall-down performance is not satisfactory. Referring to Fig. 3, on the other hand, the roll-down speed reaches saturation at about 3000 ppm. Even if the aliphatic amide is added in an amount of not smaller than, for example, 4000 ppm, therefore, the roll-down speed is not improved any more. That is, the aliphatic amide may be added in an amount enough for forming a multiplicity of molecular layers to a degree that contributes to improving the roll-down speed. Adding the aliphatic amide in amounts larger than the required amount is technically meaningless and rather pushes up the cost, permits the aliphatic amide that is bleeding to be easily removed from the inner wall surface of the bottle and deteriorates the flavor-retaining property particularly when the content is a food. From the standpoint of durability of the inverted fall-down performance, further, it is desired that the aliphatic amide is blended in an amount of not less than 500 ppm. That is, when the aliphatic amide is added in an amount of not less than 500 ppm, the multiplicity of molecular layers can be maintained in a sufficiently large amount on the surface even when the aliphatic amide is partly removed from the surface of the polyethylene resin layer due to external physical force such as thermal hysteresis or vibration.

The above patent document 1 proposes blending the erucic amide in a large amount in excess of 4000 ppm in order to prevent the content from adhering on the inner surface of the polyethylene container. According to this technology, however, the contents are limited to those substances that chiefly contain a surfactant, such as shampoo and the like, and it is considered that the erucic amide must be added in amounts larger than the amounts used in the present invention. That is, the patent document 1 is based on a principle in that the content containing a surfactant adheres little to the erucic amide and, therefore, simply utilizes the non-affinity between the content and the erucic amide, which is altogether different from the principle of the present invention which utilizes the cleavage in the multiplicity of molecular layers.

In the present invention, various aliphatic amides can be used and, at least, an unsaturated aliphatic amide can be preferably used. As the unsaturated aliphatic amide, there can be exemplified acrylamide, methacrylamide, crotonamide, isocrotonamide, undecylenic acid amide, cetoleic acid amide, oleic acid amide, erucic acid amide, ethylenebisoleic amide, oleylpalmitamide, stearylerucamide, linolic acid amide, linoleic acid amide, linolenic acid amide, and arachidonic acid amide, which can be used in a single kind or in a combination of two or more kinds. To form a multiplicity of molecular layers having highly cleaving property, further, the aliphatic amide should have a suitable degree of chain length. From this point of view, it is desired to use those having carbons in a number in a range of 14 to 24, such as cetoleic acid amide, oleic acid amide, erucic acid amide, linoleic acid amide, linolenic acid amide and arachidonic acid amide. Among them, the oleic acid amide exhibits the highest inverted fall-down performance.

In the present invention, further, it is desired to add the saturated aliphatic amide in addition to the above-mentioned unsaturated aliphatic amide from the standpoint of effectively avoiding a decrease in the inverted fall-down performance caused thermal hysteresis. When the saturated aliphatic amide is used in combination, in particular, it is desired to use an oleic acid amide and an erucic amide in combination as the unsaturated aliphatic amide. That is, as will be learned from Experiments appearing later, use of the saturated aliphatic amide in combination with the oleic acid amide and the erucic amide makes it possible to most effectively avoid a decrease in the inverted fall-down performance caused by thermal hysteresis. This is presumably due to that the erucic amide is highly compatible with the saturated aliphatic amide (e.g., stearic acid amide) used in combination with the unsaturated aliphatic amide, contributing to enhancing the interaction between the molecules of the saturated aliphatic amide distributed in the multiplicity of molecular layers formed by the oleic amide and the molecules of the oleic amide and, therefore, working to most effectively suppress the breakdown of the multiplicity of molecular layers caused by thermal hysteresis.

In this case, it is desired to use the oleic amide and the erucic amide at a weight ratio of 9:1 to 1; 9 and, particularly, 8:2 to 2:8.

As the saturated aliphatic amide to be used in combination with the unsaturated aliphatic amide, there can be exemplified butylamide, hexylamide, decylamide, lauric acid amide, myristic acid amide, palmitic acid amide and stearic acid amide, which may be used in a single kind or in two or more kinds in combination. Among these saturated aliphatic amides, the stearic acid amide is most preferred. The stearic acid amide has the same number of carbons as the oleic amide that is most desirably used, and is considered to be capable of being most stably distributed in the multiplicity of molecular layers formed by the oleic amide.

In the present invention, the unsaturated aliphatic amide and the saturated aliphatic amide are added to the polyolefin resin forming the inner surface layer of the container in a total amount in a range described above or, concretely, in an amount of not less than 500 ppmbut less than 4000 ppm and, particularly, 500 to not larger than 3000 ppm.

It is, further, desired that the unsaturated aliphatic amide and the saturated aliphatic amide are used at a weight ratio of 1:0.1 to 1:4 and, particularly, 1:0.2 to 1:4. Upon using them at the above ratio, molecules of the saturated aliphatic amide are homogeneously distributed in the multiplicity of molecular layers having highly cleaving property formed by the unsaturated aliphatic amide and, accordingly, thermally stabilizing effect is exhibited by the saturated aliphatic amide to a maximum degree.

As will be understood from the above description, the present invention uses the oleic amide and erucic amide as the unsaturated aliphatic amides and uses the stearic acid amide as the saturated aliphatic amide making it possible to most effectively avoid a decrease in the inverted fall-down performance caused by thermal hysteresis.

### <Organic peroxides>

In the present invention, further, an organic peroxide is added together with the above aliphatic amide to avoid a decrease in the inverted fall-down performance caused by thermal hysteresis. As described already, the organic peroxide that is added helps develop anchoring effect, enables the multiplicity of molecular layers of the aliphatic amide to be partly and strongly fixed to the surface of the polyolefin resin layer, effectively suppresses the multiplicity of molecular layers from being peeled off by thermal hysteresis, and works to stably maintain excellent inverted fall-down performance.

As the organic peroxide, though not limited thereto only, there can be exemplified diacyl peroxides such as benzoyl peroxide, p-chlorobenzoyl peroxide, decanoyl peroxide, lauroyl peroxide and acetyl peroxide; peroxy ethers such as t-butylperoxy-2-ethyl hexanoate, t-butylperoxy dicarbonate, cumylperoxy neodecanoate and t-butylperoxy benzoate; and percarbonates such as diisopropylperoxy dicarbonate, di-2-ethylhexylperoxy dicarbonate, and di-sec-butyloxy percarbonate, which may be used alone or in two or more kinds in combination.

In the present invention, the above organic peroxide is desirably used in an amount of 10 to 70% by weight and, particularly, 10 to 30% by weight relative to the above aliphatic amide. If the amount thereof is small, the anchoring effect is not satisfactory, and the durability of inverted fall-down performance cannot be improved to a sufficient degree. Further, its use in unnecessarily large amounts simply results in a disadvantage in cost.

A packing container which comprises the above multi-layer plastic bottle filled with ketchup features excellent inverted fall-down performance. Therefore, if the packing container is held in an inverted state, even a viscous ketchup quickly falls down toward the neck side without staying on the inner surface of the bottle wall. Namely, upon tilting the bottle, the content can be quickly taken out thoroughly without staying in the bottle.

The present invention conspicuously and effectively exhibits its effect to a maximum degree particularly when the bottle is hot-filled with ketchup.

When the organic peroxide is added together with the aliphatic amide, the inverted fall-down performance can be exhibited for extended periods of time.

### EXAMPLES;

The present invention will now be described by way of the following Experiments.

In the following Experiments, the fall-down speed of the content was measured as described below.

### [Measuring the fall-down speed]

By using a polyethylene resin (low-density polyethylene, MFR = 22) as a base material resin, resin compositions were prepared by blending the resin material resin with various kinds of additives according to recipes of Experiments and were injection-molded into sample substrates measuring 92 mm (long) x 92 mm (wide) x 1.5 mm (thick) . A ketchup (viscosity at 23°C; 1740 cps) of an amount of 70 mg was placed on ends on one side of the sample substrates which were tilted at an angle of 85 degrees so that the ketchup rolled down (temperature; 23°C). The roll-down behaviors of the ketchup at this moment were measured through a camera, analyzed, and roll-down speeds were calculated from the plots of moving distance and time, and were used as indexes. The larger the fall-down speed, the more excellent the inverted content fall-down performance.

### <Experiment 1>

Various additives were added to the polyethylene resin as shown in Table 1, and were melted and kneaded together by using a biaxial extruder. The melt-kneaded products were injection-molded to prepare sample substrates. The roll-down speeds of the ketchup were measured without subjecting the sample substrates to the thermal hysteresis. The results were as shown in Table 1.

**Table 1**

| Lubricant | | Blended amount (ppm) | Roll-down speed (mm/min) |
|---|---|---|---|
| Higher fatty acid | | | |
| | stearic acid | 1000 | 0.3 |
| Unsaturated aliphatic amide | | | |
| | oleic amide | 1000 | 22.7 |
| | erucic amide | 1000 | 3.9 |
| | ethylenebisoleic amide | 1000 | 2.1 |
| Saturated aliphatic amide | | | |
| | stearyl amide | 1000 | 1.9 |
| | lauryl amide | 1000 | 1.9 |
| | decyl amide | 1000 | 1.3 |
| Ester of higher fatty acid | | | |
| | stearic acid cholesteryl | 1000 | 0.5 |
| | stearic acid phenyl ester | 1000 | 0.6 |
| Anilide | | | |
| | stearyl anilide | 1000 | 0.1 |
| Metal soap | | | |
| | Ca stearate | 2500 | 0.8 |
| Paraffin | | | |
| | fluidized paraffin | 2500 | 0.6 |
| | refined paraffin wax | 2500 | 0.2 |
| | microcrystalline wax | 2500 | 0.7 |
| | synthetic wax | 2500 | 0.4 |
| None (blank) | | | |
| | - | - | 0.2 |

It will be learned from the results of Table 1 that addition of the aliphatic amide and, particularly, the unsaturated aliphatic amide helps improve the inverted fall-down performance when not subjected to the thermal hysteresis.

### <Experiment 2>

Sample substrates were prepared by using the oleic amide as the additive and varying the amount of its addition per the polyethylene resin. By using the sample substrates, the roll-down speeds were measured without effecting the thermal hysteresis. Fig. 3 shows a relationship between the amount of addition and the roll-down speed.

It will be learned from the results of Fig. 3 that the roll-down speed is improved to a sufficient degree when the amount of addition is in a range of not less than 500 ppm but less than 4000 ppm. It will be, further, learned that the roll-down speed is nearly saturated when the amount of addition reaches about 3000 rpm.

### <Experiment 3>

Sample substrates were prepared by using various kinds of amides, and adding the amides in an amount of 1000 ppm per the polyethylene resin. The sample substrates were held in the ketchup maintained at a temperature of 85°C for 5 seconds, taken out therefrom, and were returned back to room temperature. The surfaces thereof were washed with ion-exchanged water, dried and, thereafter, the roll-down speeds were measured. The results were as shown in Table 2.

**Table 2**

| | Additive | Roll-down speed after thermal hysteresis (mm/min) |
|---|---|---|
| Unsaturated aliphatic amide | | |
| | oleic amide | 6.7 |
| | erucic amide | 0.2 |
| | ethylenebisoleic amide | 0.1 |
| Saturated aliphatic amide | | |
| | stearyl amide | 0.5 |
| | lauryl amide | 0.1 |
| | decyl amide | 0.1 |

It will be learned from the above results that the roll-down speed decreases through the thermal hysteresis and greatly decreases, particularly, when the unsaturated aliphatic amide is added.

### <Experiment 4>

Various kinds of sample substrates (1 to 10) were prepared in the same manner as in Experiment 1 by using either the oleic amide or the erucic amide as the unsaturated aliphatic amide, using a stearyl amide (stearic acid amide) as the saturated aliphatic amide, and adding them to the polyethylene resin in amounts shown in Table 3.

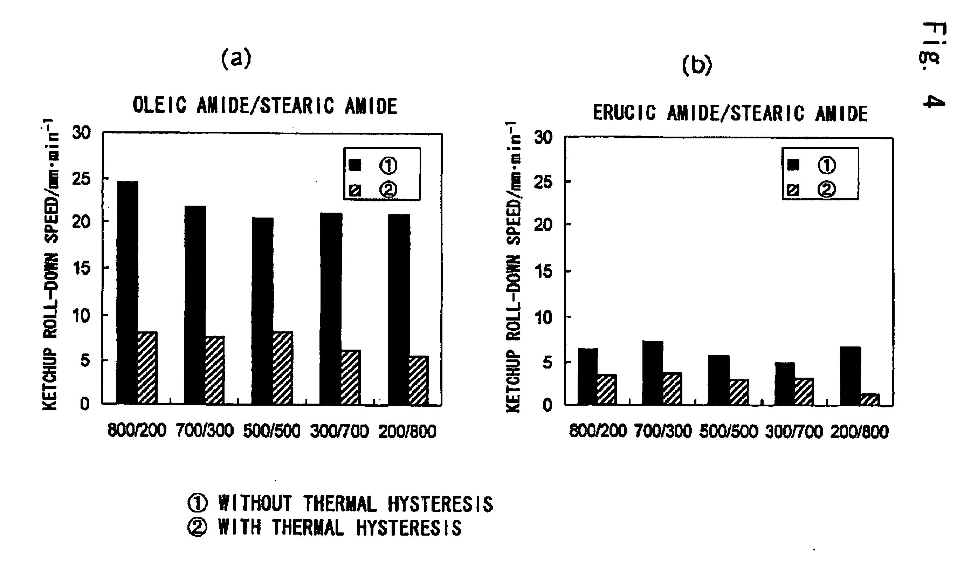

By using the sample substrates, the roll-down speeds were measured in the same manner as in Experiment 1 without effecting the thermal hysteresis. Further, the sample substrates were held in the ketchup maintained at a temperature of 85°C for 5 seconds in the same manner as in Experiment 3, taken out therefrom, and were returned back to room temperature. The surfaces thereof were washed with ion-exchanged water, dried and, thereafter, the roll-down speeds were measured. The results were as shown in Table 3 and in graphs of Figs. 4(a) and (b).

**Table 3**

| Sample No. | Unsaturated aliphatic amide | | Saturated aliphatic amide | Roll-down speed (without thermal hysteresis) (mm/min) | Roll-down speed (with thermal hysteresis) (mm/min) |
|---|---|---|---|---|---|
| | Oleic amide (ppm) | Erucic amide (ppm) | Stearyl amide (ppm) | | |
| 1 | 800 | 0 | 200 | 24.5 | 8.2 |
| 2 | 700 | 0 | 300 | 21.8 | 7.7 |
| 3 | 500 | 0 | 500 | 20.5 | 8.3 |
| 4 | 300 | 0 | 700 | 21.0 | 6.3 |
| 5 | 200 | 0 | 800 | 21.0 | 5.6 |
| 6 | 0 | 800 | 200 | 6.5 | 3.4 |
| 7 | 0 | 700 | 300 | 7.4 | 3.8 |
| 8 | 0 | 500 | 500 | 5.7 | 2.9 |
| 9 | 0 | 300 | 700 | 5.0 | 3.2 ' |
| 10 | 0 | 200 | 800 | 6.8 | 1.2 |

It will be learned from the above results that use of the saturated aliphatic amide in addition to the unsaturated aliphatic amide helps improve the roll-down speed after the thermal hysteresis and avoid a decrease in the roll-down speed caused by thermal hysteresis. Here, the roll-down speeds of the samples 4 and 5 to which the oleic amide and the stearyl amide have been added of Table 3 after the thermal hysteresis, are smaller than the roll-down speed of the sample substrate to which the oleic amide has been added in an amount of 1000 ppm of Table 2 after the thermal hystereis. It will, therefore, be learned that use of the stearyl amide in addition to the oleic amide makes small the amount of decrease in the roll-down speed.

### <Experiment 5>

Various kinds of sample substrates (1 to 9) were prepared in the same manner as in Experiment 1 by using both the oleic amide and the erucic amide as the unsaturated aliphatic amides, using the stearyl amide (stearic acid amide) as the saturated aliphatic amide, and adding them to the polyethylene resin in amounts shown in Table 4.

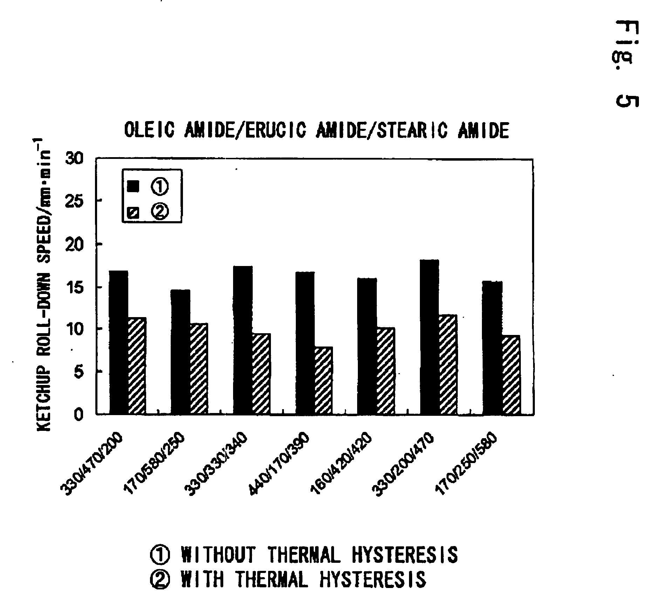

By using the sample substrates, the roll-down speeds were measured in the same manner as in Experiment 1 without effecting the thermal hysteresis. Further, the sample substrates were held in the ketchup maintained at a temperature of 85°C for 5 seconds in the same manner as in Experiment 3, taken out therefrom, and were returned back to room temperature. The surfaces thereof were washed with ion-exchanged water, dried and, thereafter, the roll-down speeds were measured. The results were as shown in Table 4 and in a graph of Figs. 5.

**Table 4**

| Sample No. | Unsaturated aliphatic amide | | Saturated aliphatic amide | Roll-down speed (without thermal hysteresis) (mm/min) | Roll-down speed (with thermal hysteresis) (mm/min) |
|---|---|---|---|---|---|
| | Oleic amide (ppm) | Erucic amide (ppm) | Stearyl amide (ppm) | | |
| 1 | 330 | 470 | 200 | 16.9 | 11.2 |
| | | total/800 | | | |
| 2 | 170 | 580 | 250 | 14.7 | 10.5 |
| | | total/750 | | | |
| 3 | 330 | 330 | 340 | 17.4 | 9.5 |
| | | total/660 | | | |
| 4 | 440 | 170 | 390 | 16.8 | 7.9 |
| | | total/610 | | | |
| 5 | 160 | 420 | 420 | 16.8 | 10.1 |
| | | total/580 | | | |
| 6 | 330 | 200 | 470 | 18.3 | 11.7 |
| | | total/530 | | | |
| 7 | 170 | 250 | 580 | 15.6 | 9.2 |
| | | total/420 | | | |

It will be learned from the above results that the substrates of the three-component type using the oleic amide and the erucic amide as the unsaturated aliphatic amides in combination with the saturated aliphatic amide, exhibit improved the roll-down speeds after the thermal hysteresis maintaining the highest stability and are most effective in avoiding a decrease in the roll-down speed caused by thermal hysteresis.

### <Experiment 6>

Sample substrates were prepared by adding the oleic amide and an organic peroxide (Perhexine 25B-40, manufactured by Nihon Yushi Co.) in amounts as shown in Table 5 per the polyethylene resin of the base member. The substrates were dipped in hot water maintained at a temperature of 85°C for 30 seconds. Thereafter, the roll-down speeds were measured and were compared with the roll-down speeds of before being treated with hot water. The results were as shown in Table 5.

**Table 5**

| Oleic amide /ppm | Organic peroxide /ppm | Roll-down speed before treated with hot water (mm/min) | Roll-down speed after treated with hot water (mm/min) |
|---|---|---|---|
| 1000 | 0 | 22.68 | 11.96 |
| 1000 | 300 | 17.69 | 18.62 |
| 1000 | 1000 | 18.23 | 17.35 |

It will be learned from the above results that the roll-down speed decreases through the thermal hysteresis when no organic peroxide is added. Upon adding the organic peroxide, however, it is allowed to avoid a decrease in the roll-down speed caused by thermal hysteresis or to improve the roll-down speed. That is, even when exposed to high temperatures, it is confirmed that addition of the organic peroxide makes it possible to stably maintain a multiplicity of molecular layers of the aliphatic amide formed by bleeding.

## Claims

1. A multi-layer plastic bottle hot-filled with a ketchup, having at least a polyolefin resin layer on an inner surface thereof and for being filled with the ketchup, wherein the polyolefin resin layer on the inner surface of the bottle contains an aliphatic amide in an amount of not less than 500 ppm but less than 4000 ppm.

2. The multi-layer plastic bottle according to claim 1, wherein at least part of said aliphatic amide is an unsaturated aliphatic amide.

3. The multi-layer plastic bottle according to claim 2, wherein said unsaturated aliphatic amide has carbons in a number in a range of 14 to 24.

4. The multi-layer plastic bottle according to claim 3, wherein said unsaturated aliphatic amide is an oleic amide.

5. The multi-layer plastic bottle according to claim 1, wherein said polyolefin resin layer is, further, blended with an organic peroxide.

6. The multi-layer plastic bottle according to claim 2, wherein said polyolefin resin layer is blended with an unsaturated aliphatic amide and a saturated aliphatic amide as said aliphatic amide.

7. The multi-layer plastic bottle according to claim 6, wherein said unsaturated aliphatic amide and the saturated aliphatic amide are blended at a weight ratio of 1:0.1 to 1:4.

8. The multi-layer plastic bottle according to claim 6, wherein at least two kinds of amides of oleic amide and erucic amide are contained as the unsaturated aliphatic amide.

9. The multi-layer plastic bottle according to claim 6, wherein said saturated aliphatic amide is a stearic acid amide.

10. The multi-layer plastic bottle according to claim 1, wherein the polyolefin resin layer on the inner surface of the bottle is a polyethylene resin layer.

## Patentansprüche

1. Mehrschichtige Kunststoffflasche zum heiß Abfüllen mit einem Ketchup, die mindestens eine Polyolefinharzschicht auf einer inneren Oberfläche davon hat und zum Abfüllen mit dem Ketchup vorgesehen ist, worin die Polyolefinharzschicht auf der inneren Oberfläche der Flasche ein aliphatisches Amid in einer Menge von nicht weniger als 500 ppm, doch weniger als 4000 ppm enthält.

2. Mehrschichtige Kunststoff asche nach Anspruch 1, worin mindestens ein Teil des genannten aliphatischen Amids ein ungesättigtes aliphatisches Amid ist.

3. Mehrschichtige Kunststoffflasche nach Anspruch 2, worin genanntes ungesättigtes aliphatisches Amid Kohlenstoffe in der Anzahl im Bereich von 14 bis 24 aufweist.

4. Mehrschichtige Kunststoffflasche nach Anspruch 3, worin genanntes ungesättigtes aliphatisches Amid ein Ölsäureamid ist.

5. Mehrschichtige unststoffflasche nach Anspruch 1, worin genannte Polyolefinharzschicht weiter mit einem organischen Peroxid gemischt ist.

6. Mehrschichtige Kunststoffflasche nach Anspruch 2, worin genannte Polyolefinharzschicht mit einem ungesättigten aliphatischen Amid und einem gesättigten aliphatischen Amid als genanntes aliphatisches Amid gemischt ist.

7. Mehrschichtige Kunststofftlasche nach Anspruch 6, worin genanntes ungesättigtes aliphatisches Amid und das gesättigte aliphatische Amid in einem Gewichtsverhältnis von 1 : 0,1 bis 1 : 4 gemischt sind.

8. Mehrschichtige Kunststoffflasche nach Anspruch 6, worin mindestens zwei Arten von Amiden, von Ölsäureamid und Erucasäureamid, als das ungesättigte aliphatische Amid enthalten sind.

9. Mehrschichtige Kunststoffflasche nach Anspruch 6, worin genanntes gesättigtes aliphatisches Amid ein Stearinsäureamid ist.

10. Mehrschichtige Kunststoffflasche nach Anspruch 1, worin die Polyolefinharzschicht auf der inneren Oberfläche der Flasche eine Polyethylenharzschicht ist.

## Revendications

1. Bouteille en plastique multicouches remplie à chaud avec un ketchup, ayant au moines une couche de résine de polyoléfine sur une surface interne de celle-ci et destinée à être remplie avec le ketchup, dans laquelle la couche de résine de polyoléfine sur la surface interne de la bouteille contient un amide aliphatique selon une quantité non inférieure à 500 ppm mais inférieure à 4000 ppm,

2. Bouteille en plastique multicouches selon la revendication 1, dans laquelle au moins une partie dudit amide aliphatique est un amide aliphatique insaturé.

3. Bouteille en plastique multicouches selon la revendication 2, dans laquelle ledit amide aliphatique insaturé possède des carbones selon un nombre allant de 14 à 24.

4. Bouteille en plastique multicouches selon la revendication 3, dans laquelle ledit amide aliphatique insaturé est un amide oléique.

5. Bouteille en plastique multicouches selon la revendication 1, dans laquelle ladite couche de résine de polyoléfine est, en outre, mélangée avec un peroxyde organique.

6. Bouteille en plastique multicouches selon la revendication 2, dans laquelle ladite couche de résine de polyoléfine est mélangée avec un amide aliphatique insaturé et un amide aliphatique saturé en tant que ledit amide aliphatique.

7. Bouteille en plastique multicouches selon la revendication 6, dans laquelle ledit amide aliphatique insaturé et ledit amide aliphatique sont selon un rapport pondéral allant de 1:0,1 à 1:4.

8. Bouteille en plastique multîcouches selon la revendication 6, dans laquelle au moines deux types d'amides d'amide oléique et d'amide érucique sont contenus en tant qu'amide aliphatique insaturé.

9. Bouteille en plastique multicouches selon la revendication 6, dans laquelle ledit amide aliphatique est un stéarique amide.

10. Bouteille en plastique multicouches selon la revendication 1, dans laquelle la couche de résine de polyoléfine sur la interné de la bouteille est une couche de résine de polyéthylène.
